# EUROPEAN PATENT SPECIFICATION

(11) **EP 4 524 504 B1**
(45) Date of publication and mention of the grant of the patent: **17.06.2026**
(21) Application number: 24199693.3
(22) Date of filing: 11.09.2024
(51) Int. Cl.: F41C 23/16, F41G 11/00

(54) **POWER AND DATA RETROFIT FOR WEAPON ACCESSORY RAIL**
STROM- UND DATEN-NACHRÜSTUNG EINER WAFFENZUBEHÖRSCHIENE
REÉQUIPEMENT DE PUISSANCE ET DE DONNÉES POUR RAIL D'ACCESSOIRE D'ARME

(30) Priority: 13.09.2023 US 202363538265 P
(43) Date of publication of application: 19.03.2025
(73) Proprietor: Wilcox Industries Corp., Newington, NH 03801 (US)
(72) Inventor: TEETZEL, James W., Newington, NH 03801 (US); RIEL, Robert, Newington, NH 03801 (US); TURNER, Elliott S., Newington, NH 03801 (US)
(74) Representative: FRKelly

(56) References cited:
- US-A1- 2016 211 095
- US-A1- 2019 049 221
- US-B2- 11 067 367

## Description

This application claims the priority benefit of U.S. provisional application serial no. 63/538,265 filed September 13, 2023.

This application is related to U.S. patent application serial no. 18/755,052 filed June 26, 2024, entitled Power and Data Interface for Weapon Accessory Mounting Rail.

### BACKGROUND

The present invention relates to a weapon mounting system, and more particularly to a retrofit system and method for providing electrical power and data connections on a legacy weapon rail interface.

US2016/0211095A1 discloses electrical switch devices that may be used to operate electrically powered firearm accessories. In embodiments, the electrical switch device is conductively connected to a firearm accessory by a flexible cable having a connector thereon for remote positioning of the device relative to the firearm accessory. In embodiments, the electrical switch device is secured to a mounting interface, such as Key Mod or M-LOK^{®} accessory mounting slots and/or a Picatinny rail. In embodiments, the electrical switch device includes user selectable programs that control the operation of connected firearm accessories.

Advantages and benefits of the present invention will become apparent to those of ordinary skill in the art upon reading and understanding the following detailed description of the preferred embodiments.

### SUMMARY

According to the invention, an apparatus is provided for providing electrical power to and communicating data and control signals among weapon accessory devices disposed on a handguard having a weapon rail interface and a plurality of slots as recited in claim 1.

Further advantageous features can be found in the dependent claims.

### BRIEF DESCRIPTION OF THE DRAWINGS

The invention may take form in various components and arrangements of components, and in various steps and arrangements of steps. The drawings are only for purposes of illustrating preferred embodiments and are not to be construed as limiting the invention.
FIG. 1 is an isometric view taken generally from the right side and front illustrating the receiver and barrel portions of a firearm having a data and power distribution system in accordance with an exemplary configuration applied to a weapon accessory interface thereof.
FIG. 2 is an isometric view taken generally from the left side and front illustrating the firearm components and retrofit assembly appearing in FIG. 1.
FIG. 3 is a view taken generally from above and the right side of the firearm components and retrofit assembly appearing in FIG. 1.
FIG. 4 is a partially exploded, generally right side view of the system appearing in FIG. 3, with the handguard removed for illustrative purposes.
FIG. 5 is a further exploded, generally right side view of the system appearing in FIG. 4.
FIG. 6 is an enlarged side view of an exemplary riser with embedded connector operatively coupled to an exemplary accessory device with partial cutaway illustrating an embedded connector.
FIG. 7 is an isometric view of a handguard having exemplary power and data inserts attached thereto.
FIG. 8 is an enlarged isometric view showing the manner of serially coupling multiple power and data ports or inserts.
FIG. 9 is an enlarged isometric view of the system appearing in FIG. 8 further including a cable extender.
FIG. 10 is a side view of an alternate configuration attached to a weapon accessory interface.
FIG. 11 illustrates another alternate configuration, with the weapon handguard portion removed for illustration purposes.
FIG. 12 is schematic block diagram of an exemplary configuration of the power and data distribution system in accordance with the present disclosure.

### DETAILED DESCRIPTION OF THE PREFERRED EMBODIMENT(S)

Reference will now be made in detail to presently preferred embodiments of the invention, one or more examples of which are illustrated in the accompanying drawings. Each example is provided by way of explanation of the invention, not limitation of the invention, which may be embodied in various forms. Therefore, specific structural and functional details disclosed herein are not to be interpreted as limiting but merely as a basis for the claims and as a representative basis for teaching one skilled in the art to variously employ the present inventive concept in virtually any appropriately detailed structure. Further, the terms and phrases used herein are not intended to be limiting but rather to provide an understandable description of the present development. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims.

The terms "a" or "an," as used herein, are defined as one or more than one. The term "another," as used herein, is defined as at least a second or more. The terms "including" and/or "having" as used herein, are defined as comprising (i.e., open transition). The term "coupled" or "operatively coupled," as used herein, is defined as indirectly or directly connected.

As used in this application, the terms "front," "rear," "upper," "lower," "upwardly," "downwardly," "left," "right," and other orientation descriptors are intended to facilitate the description of the exemplary embodiment(s) of the present invention, and are not intended to limit the structure thereof to any particular position or orientation.

All numbers herein are assumed to be modified by the term "about," unless stated otherwise. The recitation of numerical ranges by endpoints includes all numbers subsumed within that range (e.g., 1 to 5 includes 1, 1.5, 2, 2.75, 3, 3.80, 4, and 5).

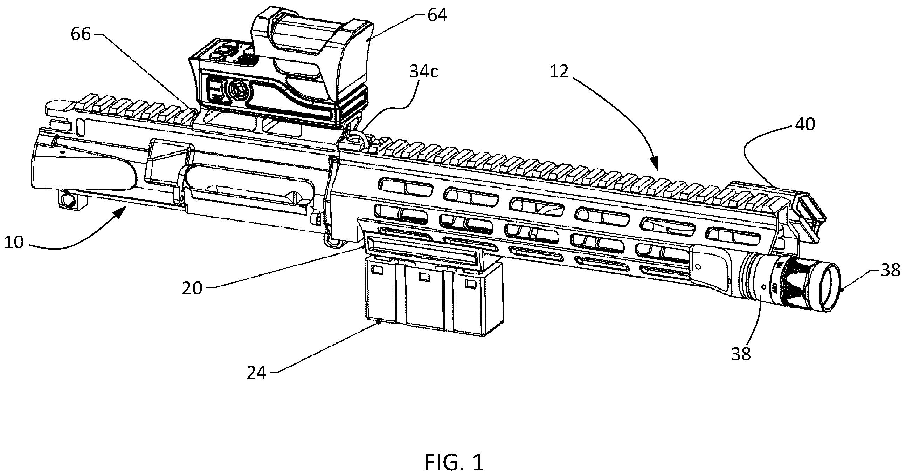

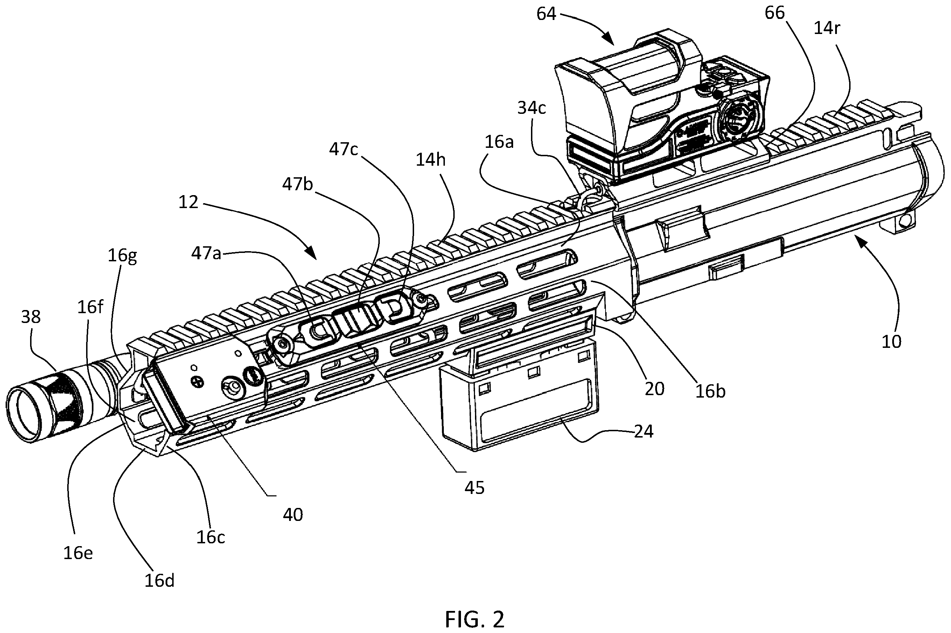

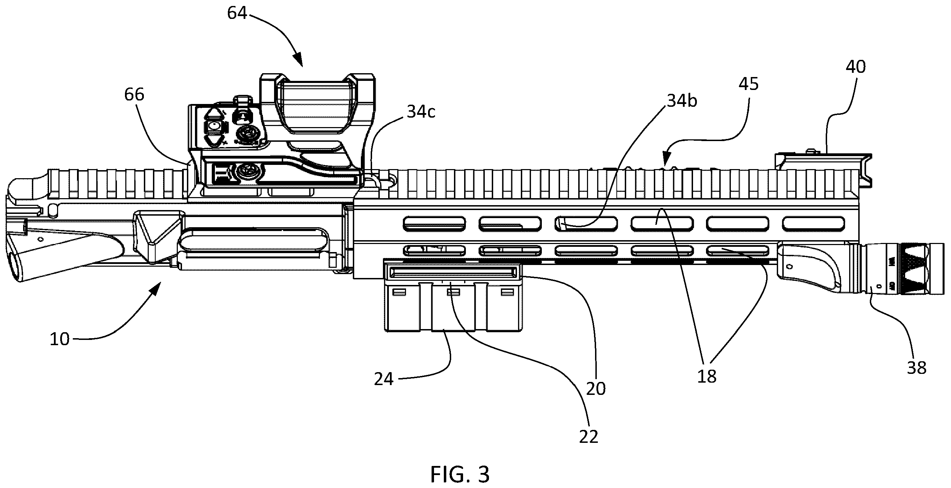

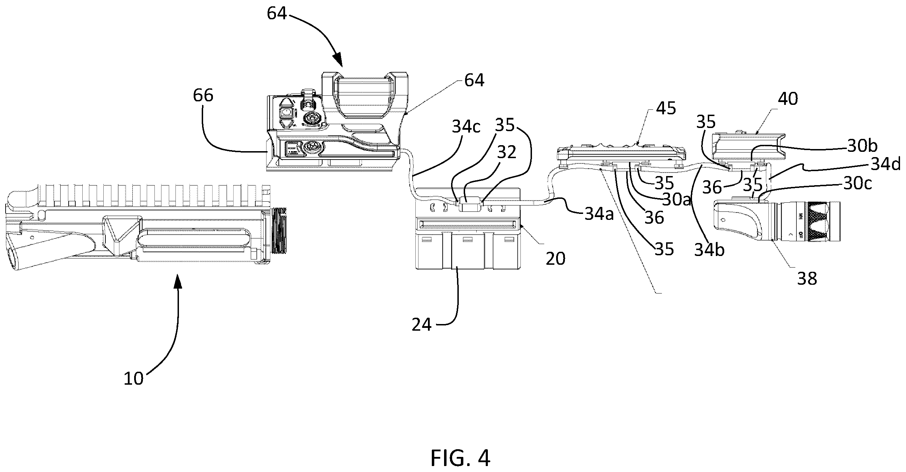

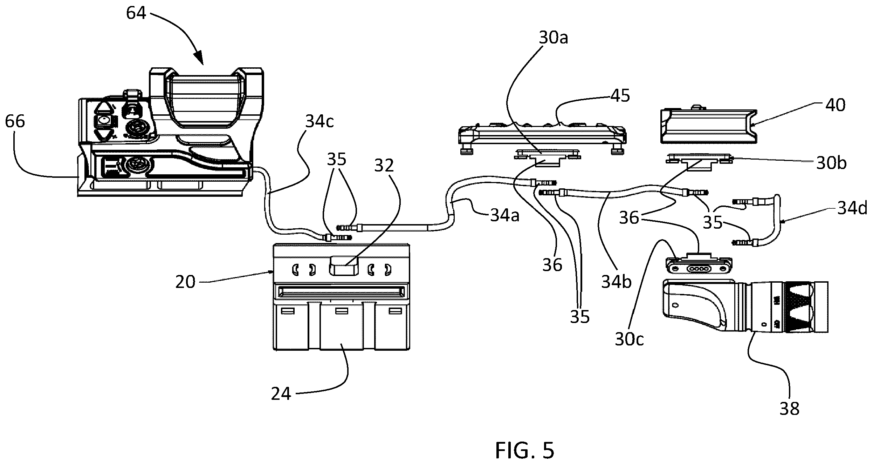

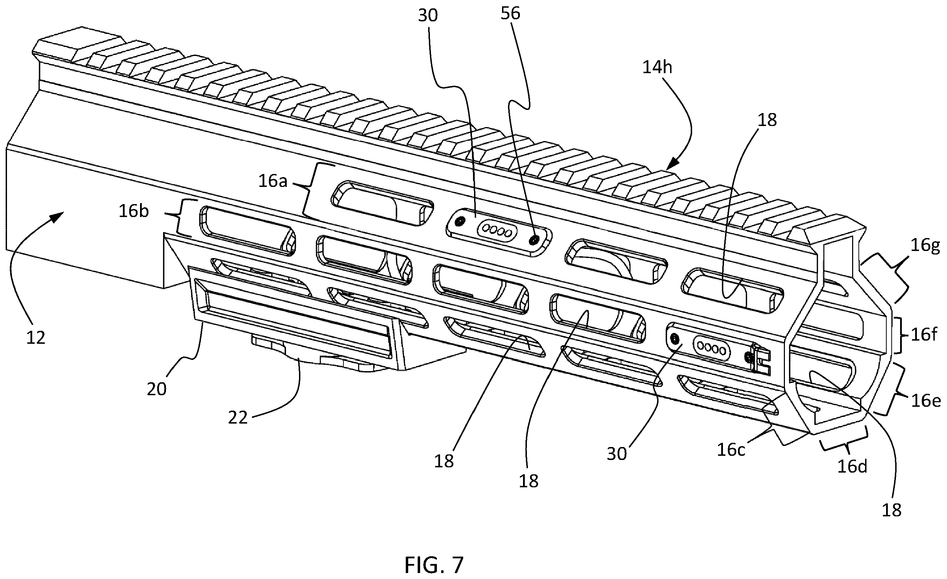

Referring now to the drawing FIGS. 1-6, there is shown an exemplary firearm receiver portion **10** having a handguard **12** attached thereto. The receiver **10** includes a Picatinny rail interface section **14r** (e.g., MIL-STD-1913 or STANAG 4694). An exemplary handguard **12** appears in FIG. 7. The handguard **12** includes an upper Picatinny rail interface portion **14h** and one or more slot rail portions **16a-16g** for mounting one or more accessories to the weapon for increased functionality of the weapon, such as scopes, sights, lasers, rangefinders, and others. The slot rail interface portions **16a-16g** may comprise an M-LOK(TM) (Magpul Industries Corp., Austin, TX) compatible mounting interface or similar system.

Each slot rail portion **16a-16g** includes a series of apertures or slots **18** which are configured to receive an M-LOK or similar accessory or fastener. In the illustrated embodiment, a computer or control module **20** is attached to the slot rail section **16d** via the slots **18** thereon. The control module **20** includes a battery interface **22** for operably connecting a power supply **24.** In the illustrated embodiment, the battery interface **22** is a bayonet style interface configured to attach a Small Tactical Universal Battery (STUB) type rechargeable battery pack **24.** The control module **20** includes a processor and wireless interface for management of data communications with one or more power and data ports or inserts **30** as will be described in greater detail below. The position of the arrangement of the control module **20** and the power and data ports can be selected by the user to form a custom configuration of data and power ports, e.g., in accordance with the functionality desired by the user.

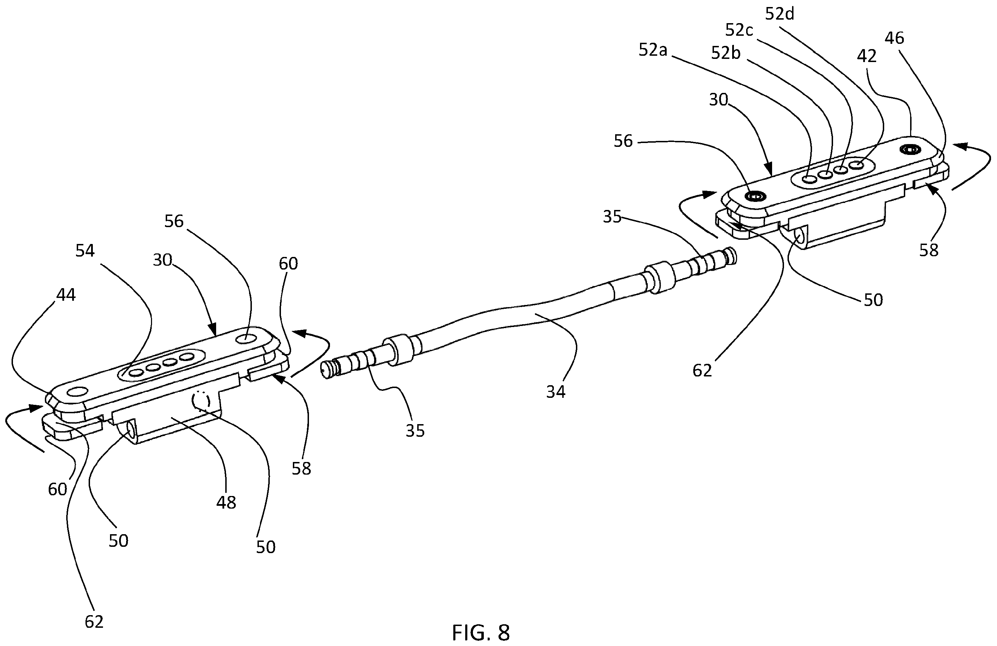

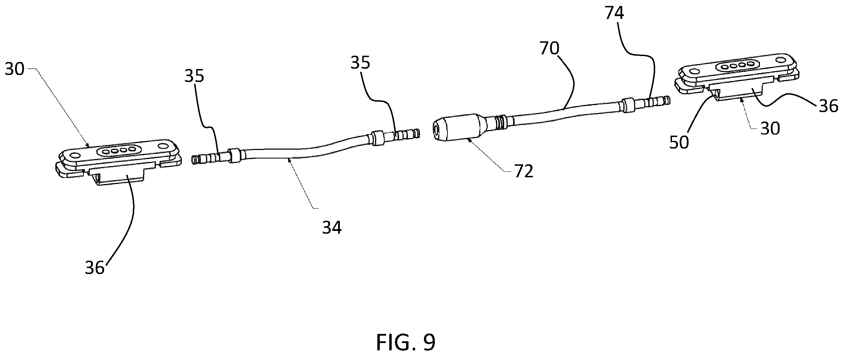

The control module **20** is secured via a slot **18** and includes a control module connector element **32** which extends through the slot **18** into the interior of the handguard **12.** The control module connector element **32** is coupled to a cable **34a.** The cable **34a** in turn is coupled to an insert connector element **36** on an insert **30.** The insert connector element **36,** in turn, is coupled to another cable **34b.** The cables **34a, 34b** include connector ends **35** which engage connector receptacles, such as receptacles **50** on the inserts **30,** and like receptacles on the controller **20,** and the accessory device **64,** flashlight **38,** laser package **40,** keypad controller **45,** and so forth. The cable **34b,** in turn, is coupled to an accessory device, such as a flashlight **38** or laser package **40.** In embodiments, the laser package **40** is a weapon laser accessory for targeting which integrates a plurality of laser emitters, such as visible and infrared aiming lasers, an IR illumination laser, etc., which are coaligned within a single housing. It will be recognized that the illustrated configuration is exemplary only and that any number of additional or alternative devices may be employed and any number of additional inserts **30** can be serially connected as shown in FIGS. 8 and 9.

As best seen in FIGS. 8 and 9, each insert **30** includes a housing **42** having an upper peripheral flange **44.** In embodiments, the peripheral flange **44** has a beveled edge **46** which provides smoother profile, thereby reducing snagging potential and improving ergonomics and comfort when handling and manipulating the weapon. The housing **42** is attached to the connector element **48** which includes cable connectors **50** for cable connection to the controller **20** and/or an adjacent insert **30** in the chain. Electrical contacts **52a-52d** are potted within an electrical insulator block **54** and electrically coupled to the connectors **50** for transmitting power and data signals.

In embodiments, the contact **52a** is a ground (GND) pad used as a reference point for electrical potential and common return path for the circuit. In operation, the contact **52a** is electrically coupled to the ground (e.g., negative) terminal of the power supply **24.** In embodiments, the contact pads **52b** and **52c** are coupled to data plus (D+) and data minus (D-) data lines, respectively, which carry the positive and negative signals respectively, for transmitting data between devices in accordance with a digital communication protocol. The digital communication protocol and corresponding connectors may be adapted to accommodate any communication protocol that is suitable for low speed data communication. This includes, without limitation, various protocols such as Universal Serial Bus (USB), Controller Area Network (CAN), General Purpose Input/Output (GPIO), Serial Peripheral Interface (SPI), Inter-Integrated Circuit (I2C), Universal Asynchronous Receiver-Transmitter (UART), Modbus, and Apple Lightning. In embodiments, the contact **52d** is a voltage common collector (VCC) contact which is electrically coupled to the power supply voltage (e.g., positive) terminal of the power supply **24.**

Threaded fasteners **56** engage rotatable retention clips **58** which are rotatable in the direction of the arrows appearing in FIG. 8. The retention clips **58** include an extending tab portion **60** which cooperate with the peripheral flange **44** to define a channel **62** at each end. Rotation of the fastener **56** allows for selectively tightening/clamping and loosening/unclamping the insert within a slot **18.** Certain corners of the retention clips **58** can be selectively radiused or rounded to permit the clips **58** to rotate when the threaded fasteners **56** are rotated and other corners may be squared to act as stops to prevent rotation of the clips **58** when the threaded fasteners **56** are rotated, i.e., depending on the direction of rotation and current position of the clips **58.** Accessory devices can be electrically coupled to the connector elements on the insert and mechanically secured to the slot rail interface using one or more adjacent slots on the slot rail interface.

In FIG. 8, there appears an embodiment where a relatively short cable **34** is provided to provide a serial connection between inserts **30** to be utilized between adjacent devices in the serial chain where the inserts are placed in relatively close proximity on the firearm. Referring now to FIG. 9, there is shown a further embodiment wherein a cable extender **70** (e.g., a male-female cable extender) includes a socket connector end **72** configured to receive a connector end **35** of the cable **34** and a plug connector end **74** configured to be received within a socket connector **50** the connector element **36** of an adjacent rail insert **30.** The cable extender **70** allows the positioning of serially adjacent components relatively apart on the weapon, providing flexibility in configuring the user's setup. In alternative embodiments, the cable extender **70** could be replaced with a barrel connector (socket to socket) for coupling two like connection cables **34.**

In the embodiments of FIGS. 1-5, an accessory controller device such as a keypad controller **45** is electrically coupled to an insert **30** which, in turn, couples the keypad controller **45** to the controller system **20.** In the illustrated embodiment, the keypad controller **45** comprises a plurality of buttons or keys **47a, 47b, 47c** for controlling operation of an attached accessory device such as the flashlight **38** and laser package **40.**

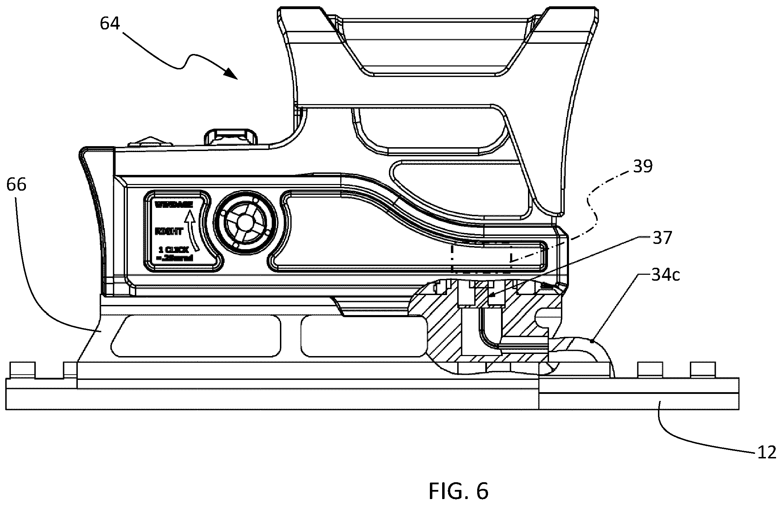

In certain embodiments, as illustrated, an optics riser **66** may be provided between the rail section **14h, 14r,** as necessary, to raise the height of the device **64** to a suitable height. In the embodiment illustrated in FIGS. 1-4, a cable **34c** has a proximal end electrically coupled to a connector the optics riser **66.** The optics riser **66,** in turn is operatively coupled to the accessory device **64** via an embedded connector. The accessory device **64** may be a sight, fire control system, or the like. As best seen in FIG. 6, which illustrates an exemplary embodiment, the proximal end of the cable **34c** includes a connector element **37** embedded within the riser **66** which detachably engages a complementary connector element **39** on the accessory device **64.** In embodiments, the proximal end of the cable **34c** is nondetachable or hardwired to the connector element **37** and the riser **66.** Alternatively, the proximal end of the cable **34c** includes a plug which is detachable from the connector element **37.**

The opposite end of the cable **34c** includes a plug **35** engaging a complementary first connector socket **50** on the connector element **32** on the control system **20.** A cable **34a** includes a plug **35** engaging a second electrical connector socket **50** on the connector element **32.** The opposite end of the cable **34a** includes a plug **35** engaging a first connector socket **50** on a connector element **36** on an insert **30a.** A control keypad **45,** in turn, is operatively coupled to the insert **30a.** Another cable **34b** includes a plug **35** engaging a second electrical connector socket **50** on the connector element **36** of the insert **30a.** The opposite end of the cable **34b** includes a plug **35** engaging a first connector socket **50** on a connector element **36** on an insert **30b**. A laser module **40,** in turn, is operatively coupled to the insert **30b.** A cable **34d** includes a plug **35** engaging a second electrical connector socket **50** on the connector element **36** of the insert **30b**. The opposite end of the cable **34d** includes a plug **35** engaging a first connector socket **50** on a connector element **36** on an insert **30c**. A flashlight module **38,** in turn, is operatively coupled to the insert **30c**. A second connector socket **50** on the connector element **36** of the insert **30c** is available to connect further devices in serial fashion.

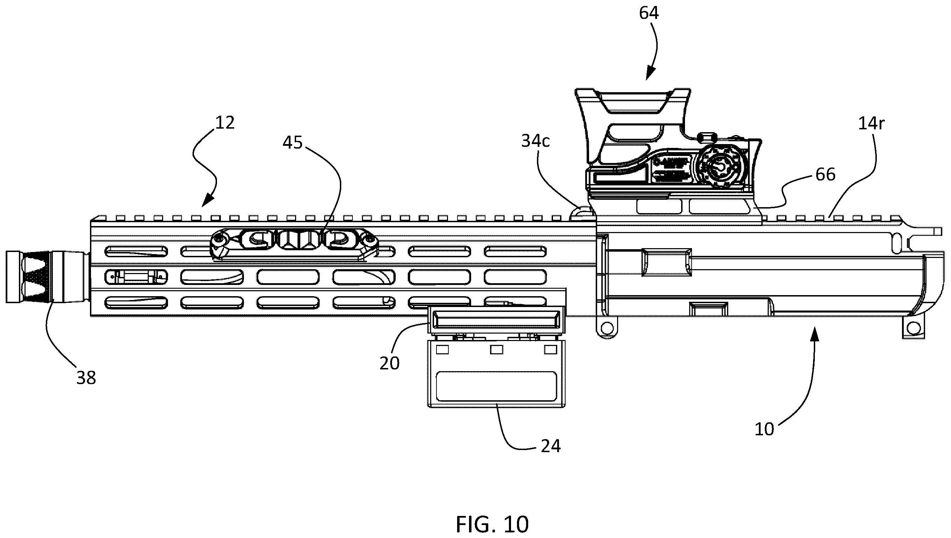

Referring now to FIG. 10, there appears a system which includes an optics riser **66** having an accessory device **64** disposed on a Picatinny accessory rail portion **14r** of a firearm receiver **10** and a controller **20** with battery **24,** keypad controller **45,** and flashlight accessory **38** attached to a slot rail handguard portion **12.** The controller **20** includes a slot rail interface connector for connection to the handguard **12.** The keypad controller **45** and flashlight **38** are coupled to the slot rail handguard **12** via rail inserts **30** as described above.

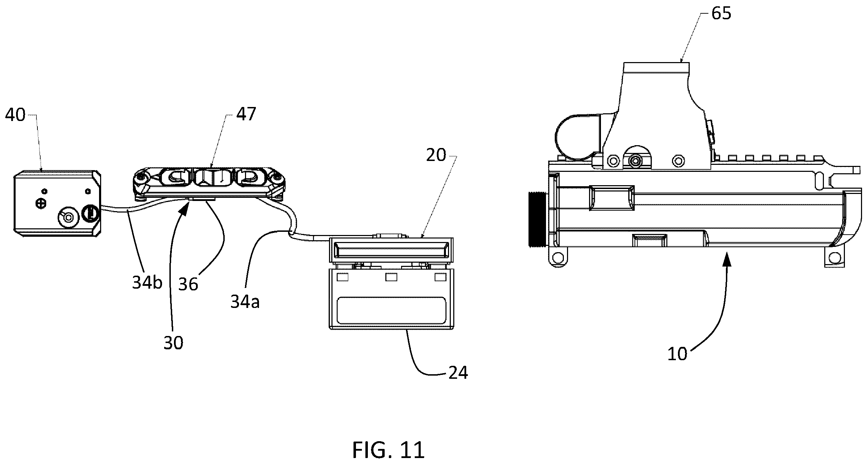

Referring now to FIG. 11, there appears a configuration that is similar to the configuration appearing in FIG. 10, but with the slot rail handguard removed for ease of exposition. The configuration in FIG. 11 is as described above by way of reference to FIG. 10, except that in FIG. 11, the riser **66** is removed and the accessory device **64** has been replaced with an alternative optical accessory **65** which is not coupled to the controller system **20.** In addition, the flashlight module **38** appearing in FIG. 10 has been removed and the laser module **40** has been added to the configuration shown in FIG. 11.

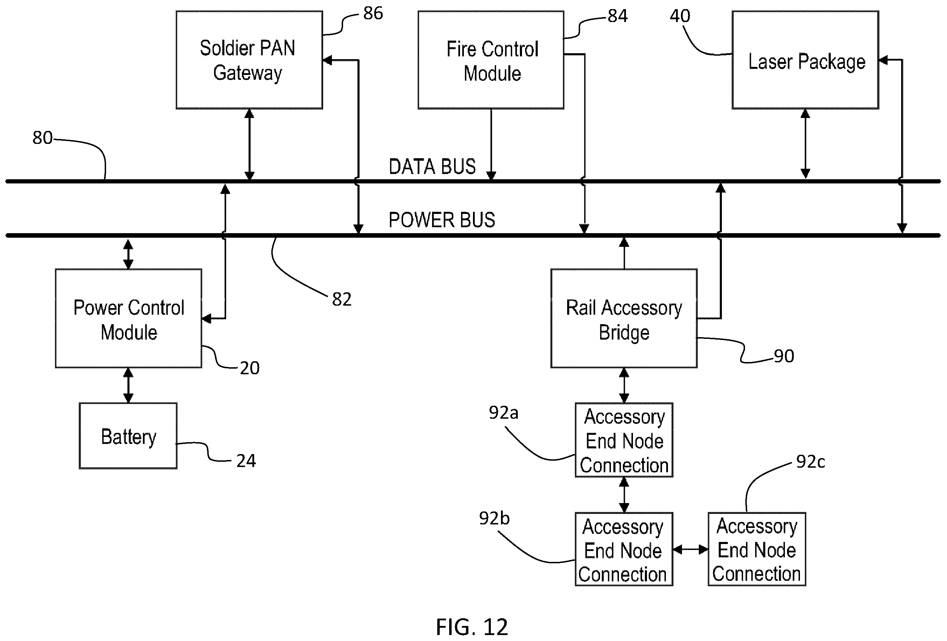

Referring now to FIG. 12, there is shown a block diagram on an exemplary modular power and data distribution system herein. The system combines power and data on a weapon system that is scalable. The weapon system can be powered by battery **24** or wired connection. In embodiments, voltage and available current can be scaled up or down based on requests over a data bus **80.** In embodiments, the data bus comprises a full duplex, copper-based interface that allows subsystems to communicate over the weapon-based network system.

Accessories connect to the weapon interface with a common power bus **82** and data bus **80.** In embodiments, the power bus **82** is a bidirectional power bus that can sink and source current for the weapon platform. The power bus **82** interfaces with the power control module **20** as well as additional nodes on the power bus.

Accessories can include, without limitation, laser packages **40,** optical detection systems, visual augmentation systems, fire control modules **84,** as well as human-machine interfaces. In embodiments, attached devices can use bridges to convert power and data to acceptable common protocols for interface with other networked connections on the power and data buses **82, 80.** In embodiments, the modular power and data distribution system herein is configured to use wireless bridges between a personal area network (PAN) and other soldier interface systems such as body worn appliances, head borne appliances, and so forth.

In embodiments, the power control module **20** comprises a modular subcomponent that allows bidirectional source and sink capabilities with scalable voltage and current. In certain embodiments, the power control module **20** is configured to interface with batteries **24,** hardwired power sources, and wireless power transmission to ensure a stable weapon power bus. In embodiments where multiple power sources are available, the power sources are switchable via the integrated power bus **82.** In embodiments where multiple power sources are available, the battery **24** may be charged via the integrated power bus **82.**

In embodiments, a soldier PAN gateway **86** provides an interface to wired and wireless inter soldier networks. In embodiments, the soldier PAN gateway **86** is configured to operably interface with head borne data links, body worn data links, vehicle data links, and others.

In embodiments, a fire control module **84** includes processing electronics configured to calculate laser drive parameters, provide signaling and sensor suite information to drive data for reticle or aim point display, ballistic solutions, laser communications, human-machine interfaces, power control, and data processing from external sources.

The laser package **40** provides real time laser drive capabilities as well as monitoring sensors. In embodiments, laser outputs can be mixed wavelength and specific to usage.

A rail accessory bridge **90** provides data and power bridge at rail junction points to support varying accessory end nodes. In embodiments, the rail accessory bridge **90** uses protocol conversion to enable dissimilar end nodes to communicate on the same network data bus **80.**

Accessory end nodes **92a-92c,** and which may include up to any number N of accessories comprise human-machine interfaces such as keypads, buttons, joysticks, sensors, displays, flashlights, and camera-based systems.

The elements described and depicted herein, including in flow charts and block diagrams in the drawing figures, imply logical boundaries between the elements. However, according to software or hardware engineering practices, the depicted elements and the functions thereof may be implemented in a computer-based information handling system having one or more processors capable of executing program instructions stored thereon or in a memory operably associated therewith. Furthermore, the elements depicted in the flow chart and block diagrams or any other logical component may be implemented on a machine capable of executing program instructions. Thus, while the foregoing drawings and descriptions set forth functional aspects of the disclosed system, no particular arrangement of software for implementing these functional aspects should be inferred from these descriptions unless explicitly stated or otherwise clear from the context. Program instructions may be realized in hardware, software, firmware, or any combination of hardware, software, and/or firmware suitable for a particular application. The hardware may include a general-purpose computer, dedicated or specific computing device, or a particular aspect or component of a specific computing device. The processes may be realized in one or more microprocessors, microcontrollers, embedded microcontrollers, programmable digital signal processors or other programmable devices, along with internal and/or external memory. The processes may also, or instead, be embodied in an application specific integrated circuit, a programmable gate array, programmable array logic, or any other device or combination of devices that may be configured to process electronic signals. It will further be appreciated that one or more of the processes may be realized as a computer executable code capable of being executed on a machine-readable medium.

The invention has been described with reference to the preferred embodiments. Modifications and alterations will occur to others upon a reading and understanding of the preceding detailed description. It is intended that the invention be construed as including all such modifications and alterations insofar as they come within the scope of the appended claims.

## Claims

1. An apparatus (10) for providing electrical power to and communicating data and control signals among weapon accessory devices disposed on a handguard (12) having a weapon rail interface (14) and a plurality of slots (18), the apparatus (10) comprising:
a control module (20) attachable to the handguard (12) via at least one of the plurality of slots (18) of the handguard (12), the control module (20) comprising:
a processor;
a power supply (24) operably coupled to the processor; and
a control module connector element (32) adapted to extend through the at least one of the plurality of slots (18) via which the control module (20) is attachable to the weapon rail interface (14);
at least one insert (30) comprising an insert connector element (36), the at least one insert (30) adapted for operative coupling with a weapons accessory device (64, 38, 40, 45), wherein the processor of the control module (20) comprises a communications interface for data communication with the at least one insert (30);
at least one cable (34) comprising connector ends (35) on either end of the at least one cable (34), wherein the connector ends (35) are adapted to couple to at least the control module connector element (32) of the control module (20) and the insert connector element (36) of the at least one insert (30);
wherein the insert connector element (36) comprises connector receptacles (50) configured to engage with a respective connector end (35) of the at least one cable (34);
wherein the at least one insert (30) further comprises a housing (40) attached to the insert connector element (36) with a plurality of electrical contacts (52) electrically coupled to connector receptacles (50) for transmitting power and data signals, **characterized in that** the plurality of electrical contacts (52) comprises:
a first electrical contact (52a) electrically coupled to a ground/negative terminal of the power supply;
a second electrical contact (52b) electrically coupled to a data line configured to carry positive signals for transmitting data between devices;
a third electrical contact (52c) electrically coupled to a data line configured to carry negative signals for transmitting data between devices; and
a fourth electrical contact (52d) electrically coupled to a voltage/positive terminal of the power supply.

2. The apparatus of claim 1, wherein the control module (20) further comprises a power interface (22) for operably connecting the power supply (24) of the control module (20).

3. The apparatus of claim 1 or claim 2, wherein:
the at least one cable (34) comprises at least two cables (34a, 34b);
the connector ends (35) are further adapted to couple to the weapons accessory device (64, 38, 40, 45); and
the operative coupling of the at least one insert (30) with the weapons accessory device (64, 38, 40, 45) is via one of the at least two cables (34a, 34b).

4. The apparatus of any of the preceding claims, wherein the weapons accessory device (64) with which the at least one insert (30) is adapted for operative coupling is selected from the group consisting of a flashlight (38), a laser package (40), an optical sight, and a fire control system.

5. The apparatus of any of the preceding claims, further comprising at least one of the weapons accessory device (64) with which the at least one insert is adapted for operative coupling, wherein the at least one weapons accessory device (64) is one or more selected from the group consisting of a flashlight (38), a laser package (40), an optical sight, and a fire control system.

6. The apparatus of any of the preceding claims, wherein the control module connector element (32) comprises connector receptacles that engage with the connector ends (35) of the at least one cable (34).

7. The apparatus of any of the preceding claims, wherein the housing (42) has at least one upper peripheral flange (44).

8. The apparatus of claim 7, wherein the at least one upper peripheral flange (44) has a beveled edge (46).

9. The apparatus of claim 7 or claim 8, wherein:
the at least one insert (30) further comprises at least one retention clip (58) with an extending tab portion (60) and a threaded fastener (56) around which the at least one retention clip (58) is rotatable;
a channel (62) is defined between the at least one upper peripheral flange (44) and the extending tab portion (60) of the at least one retention clip (58); and
rotation of the retention clip (58) around the threaded fastener (56) allows for tightening and loosening of the at least one insert (30) within a slot of the weapon rail interface (14).

10. The apparatus of claim 9, wherein at least one corner of the at least one retention clip (58) is rounded to permit retention clip (58) to rotate when the threaded fastener (56) is rotated.

11. The apparatus of claim 9 or claim 10, wherein at least one corner of the at least one retention clip (58) is squared to act as a stop to prevent the retention clip (58) from rotating when the threaded fastener (56) is rotated.

12. The apparatus of any of claims 9-11, further comprising at least one cable extender (70).

13. The apparatus of any of the preceding claims, further comprising an accessory controller device (45) electrically coupled to the at least one insert (30) and the control module (20), wherein the accessory controller device (45) comprises a plurality of buttons (47a, 47b, 47c) for controlling operation of the weapons accessory device (64, 38, 40, 45) with which the at least one insert (30) is adapted for operative coupling.

14. The apparatus of any of the preceding claims, further comprising an optics riser (66) operatively coupled to the weapons accessory device (64, 38, 40, 45) with which the at least one insert (30) is adapted for operative coupling and to the at least one cable (34).

15. The apparatus of any of the preceding claims, further comprising the handguard (12) comprising the weapons rail interface (14) and having a plurality of slots (18) adapted to receive a weapons accessory device (64, 38, 40, 45).

16. The apparatus of any of the preceding claims, wherein the communications interface of the processor is a wireless interface.

## Patentansprüche

1. Einrichtung (10) zum Bereitstellen von elektrischer Energie für und Kommunizieren von Daten und Steuersignalen zwischen Waffenzubehörvorrichtungen, die an einem Handschutz (12) angeordnet sind, der eine Waffenschnittstelle (14) und eine Vielzahl von Schlitzen (18) aufweist, wobei die Einrichtung (10) umfasst:
ein Steuermodul (20), das an dem Handschutz (12) über mindestens einen der Vielzahl von Schlitzen (18) des Handschutzes (12) anbringbar ist, wobei das Steuermodul (20) umfasst:
einen Prozessor;
eine Stromversorgung (24), die wirkverbunden mit dem Prozessor ist; und
ein Steuermodul-Verbinderelement (32), das angepasst ist, um sich durch den mindestens einen der Vielzahl von Schlitzen (18) zu erstrecken, über den das Steuermodul (20) an der Waffenschienenschnittstelle (14) anbringbar ist;
mindestens einen Einsatz (30), umfassend ein Einsatzverbinderelement (36), wobei der mindestens eine Einsatz (30) für eine Wirkkopplung mit einer Waffenzubehörvorrichtung (64, 38, 40, 45) angepasst ist, wobei der Prozessor des Steuermoduls (20) eine Kommunikationsschnittstelle zur Datenkommunikation mit dem mindestens einen Einsatz (30) umfasst;
mindestens ein Kabel (34), umfassend Verbinderenden (35) an jedem Ende des mindestens einen Kabels (34), wobei die Verbinderenden (35) angepasst sind, um mindestens an das Steuermodul-Verbinderelement (32) des Steuermoduls (20) und das Einsatzverbinderelement (36) des mindestens einen Einsatzes (30) zu koppeln;
wobei das Einsatzverbinderelement (36) Verbinderaufnahmen (50) umfasst, die konfiguriert sind, um mit einem jeweiligen Verbinderende (35) des mindestens einen Kabels (34) in Eingriff zu kommen;
wobei der mindestens eine Einsatz (30) ferner ein Gehäuse (40) umfasst, das an dem Einsatzverbinderelement (36) mit einer Vielzahl von elektrischen Kontakten (52) angebracht ist, die elektrisch mit Verbinderaufnahmen (50) zum Übertragen von Energie- und Datensignalen gekoppelt sind, **dadurch gekennzeichnet, dass** die Vielzahl von elektrischen Kontakten (52) umfasst:
einen ersten elektrischen Kontakt (52a), der elektrisch mit einem Masse-/Minuspol der Stromversorgung gekoppelt ist;
einen zweiten elektrischen Kontakt (52b), der elektrisch mit einer Datenleitung gekoppelt ist, die konfiguriert ist, um positive Signale zum Übertragen von Daten zwischen Vorrichtungen zu führen;
einen dritten elektrischen Kontakt (52c), der elektrisch mit einer Datenleitung gekoppelt ist, die konfiguriert ist, um negative Signale zum Übertragen von Daten zwischen Vorrichtungen zu führen; und
einen vierten elektrischen Kontakt (52d), der elektrisch mit einem Spannungs-/Pluspol der Stromversorgung gekoppelt ist.

2. Einrichtung nach Anspruch 1, wobei das Steuermodul (20) ferner eine Stromschnittstelle (22) zum wirksamen Verbinden der Stromversorgung (24) des Steuermoduls (20) umfasst.

3. Einrichtung nach Anspruch 1 oder Anspruch 2, wobei:
das mindestens eine Kabel (34) mindestens zwei Kabel (34a, 34b) umfasst;
die Verbinderenden (35) ferner angepasst sind, um an die Waffenzubehörvorrichtung (64, 38, 40, 45) zu koppeln; und
die Wirkkopplung des mindestens einen Einsatzes (30) mit der Waffenzubehörvorrichtung (64, 38, 40, 45) über eines der mindestens zwei Kabel (34a, 34b) erfolgt.

4. Einrichtung nach einem der vorhergehenden Ansprüche, wobei die Waffenzubehörvorrichtung (64), mit der der mindestens eine Einsatz (30) für eine Wirkkopplung angepasst ist, ausgewählt ist aus der Gruppe bestehend aus einer Taschenlampe (38), einem Laserpaket (40), einem optischen Visier und einem Feuerleitsystem.

5. Einrichtung nach einem der vorhergehenden Ansprüche, ferner umfassend mindestens eine der Waffenzubehörvorrichtungen (64), mit der der mindestens eine Einsatz für eine Wirkkopplung angepasst ist, wobei die mindestens eine Waffenzubehörvorrichtung (64) eine oder mehrere ist, ausgewählt aus der Gruppe bestehend aus einer Taschenlampe (38), einem Laserpaket (40), einem optischen Visier und einem Feuerleitsystem.

6. Einrichtung nach einem der vorhergehenden Ansprüche, wobei das Steuermodul-Verbinderelement (32) Verbinderaufnahmen umfasst, die mit den Verbinderenden (35) des mindestens einen Kabels (34) in Eingriff kommen.

7. Einrichtung nach einem der vorhergehenden Ansprüche, wobei das Gehäuse (42) mindestens einen oberen Umfangsflansch (44) aufweist.

8. Einrichtung nach Anspruch 7, wobei der mindestens eine obere Umfangsflansch (44) eine abgeschrägte Kante (46) aufweist.

9. Einrichtung nach Anspruch 7 oder Anspruch 8, wobei:
der mindestens eine Einsatz (30) ferner mindestens einen Halteclip (58) mit einem sich erstreckenden Laschenabschnitt (60) und ein Gewindebefestigungsmittel (56) umfasst, um das der mindestens eine Halteclip (58) drehbar ist;
ein Kanal (62) zwischen dem mindestens einen oberen Umfangsflansch (44) und dem sich erstreckenden Laschenabschnitt (60) des mindestens einen Halteclips (58) definiert ist; und
eine Drehung des Halteclips (58) um das Gewindebefestigungsmittel (56) das Festziehen und Lösen des mindestens einen Einsatzes (30) innerhalb eines Schlitzes der Waffenschienenschnittstelle (14) ermöglicht.

10. Einrichtung nach Anspruch 9, wobei mindestens eine Ecke des mindestens einen Halteclips (58) abgerundet ist, um zu erlauben, dass sich der Halteclip (58) dreht, wenn das Gewindebefestigungsmittel (56) gedreht wird.

11. Einrichtung nach Anspruch 9 oder Anspruch 10, wobei mindestens eine Ecke des mindestens einen Halteclips (58) rechtwinklig ist, um als Anschlag zu wirken, um zu verhindern, dass sich der Halteclip (58) dreht, wenn das Gewindebefestigungsmittel (56) gedreht wird.

12. Einrichtung nach einem der Ansprüche 9-11, ferner umfassend mindestens eine Kabelverlängerung (70).

13. Einrichtung nach einem der vorhergehenden Ansprüche, ferner umfassend eine Zubehörsteuervorrichtung (45), die elektrisch mit dem mindestens einen Einsatz (30) und dem Steuermodul (20) gekoppelt ist, wobei die Zubehörsteuervorrichtung (45) eine Vielzahl von Tasten (47a, 47b, 47c) zum Steuern des Betriebs der Waffenzubehörvorrichtung (64, 38, 40, 45) umfasst, mit der der mindestens eine Einsatz (30) für eine Wirkkopplung angepasst ist.

14. Einrichtung nach einem der vorhergehenden Ansprüche, ferner umfassend eine Optikerhöhung (66), die wirkgekoppelt ist mit der Waffenzubehörvorrichtung (64, 38, 40, 45), mit der der mindestens eine Einsatz (30) für eine Wirkkopplung angepasst ist, und mit dem mindestens einen Kabel (34).

15. Einrichtung nach einem der vorhergehenden Ansprüche, ferner umfassend den Handschutz (12), der die Waffenschienenschnittstelle (14) umfasst und eine Vielzahl von Schlitzen (18) aufweist, die angepasst sind, um eine Waffenzubehörvorrichtung (64, 38, 40, 45) aufzunehmen.

16. Einrichtung nach einem der vorhergehenden Ansprüche, wobei die Kommunikationsschnittstelle des Prozessors eine drahtlose Schnittstelle ist.

## Revendications

1. Appareil (10) destiné à fournir une alimentation électrique et à communiquer des données et des signaux de commande entre des dispositifs accessoires d'arme disposés sur un garde-main (12) comportant une interface de rail d'arme (14) et une pluralité de fentes (18), l'appareil (10) comprenant :
un module de commande (20) pouvant être fixé au garde-main (12) via au moins l'une de la pluralité de fentes (18) du garde-main (12), le module de commande (20) comprenant :
un processeur ;
une alimentation électrique (24) reliée fonctionnellement au processeur ; et
un élément de connecteur de module de commande (32) adapté pour se prolonger à travers l'au moins une de la pluralité de fentes (18) par lesquelles le module de commande (20) est fixé à l'interface de rail d'arme (14) ;
au moins un insert (30) comprenant un élément de connecteur d'insert (36), l'au moins un insert (30) étant adapté pour le couplage opérationnel avec un dispositif accessoire d'armes (64, 38, 40, 45), dans lequel le processeur du module de commande (20) comprend une interface de communication pour la communication de données avec l'au moins un insert (30) ;
au moins un câble (34) comprenant des extrémités de connecteur (35) à chaque extrémité de l'au moins un câble (34), dans lequel les extrémités de connecteur (35) sont adaptées pour se coupler au moins à l'élément de connecteur de module de commande (32) du module de commande (20) et à l'élément de connecteur d'insert (36) de l'au moins un insert (30) ;
dans lequel l'élément de connecteur d'insert (36) comprend des réceptacles de connecteur (50) configurés pour venir en prise avec une extrémité de connecteur respective (35) de l'au moins un câble (34) ;
dans lequel l'au moins un insert (30) comprend également un boîtier (40) fixé à l'élément de connecteur d'insert (36) avec une pluralité de contacts électriques (52) couplés électriquement à des réceptacles de connecteur (50) pour la transmission de signaux d'alimentation et de données, **caractérisé en ce que** la pluralité de contacts électriques (52) comprend :
un premier contact électrique (52a) couplé électriquement à une borne de terre/négative de l'alimentation électrique ;
un deuxième contact électrique (52b) couplé électriquement à une ligne de données configurée pour transporter des signaux positifs pour la transmission de données entre les dispositifs ;
un troisième contact électrique (52c) couplé électriquement à une ligne de données configurée pour transporter des signaux négatifs pour la transmission de données entre les dispositifs ; et
un quatrième contact électrique (52d) couplé électriquement à une borne de tension/positive de l'alimentation électrique.

2. Appareil selon la revendication 1, dans lequel le module de commande (20) comprend également une interface d'alimentation (22) pour connecter fonctionnellement l'alimentation électrique (24) du module de commande (20).

3. Appareil selon la revendication 1 ou la revendication 2, dans lequel :
l'au moins un câble (34) comprend au moins deux câbles (34a, 34b) ;
les extrémités de connecteur (35) sont également adaptées pour se coupler au dispositif accessoire d'armes (64, 38, 40, 45) ; et
le couplage opérationnel de l'au moins un insert (30) avec le dispositif accessoire d'armes (64, 38, 40, 45) se fait via l'un des au moins deux câbles (34a, 34b).

4. Appareil selon l'une quelconque des revendications précédentes, dans lequel le dispositif accessoire d'armes (64) avec lequel l'au moins un insert (30) est adapté pour le couplage opérationnel est choisi parmi le groupe constitué d'une lampe de poche (38), d'un ensemble laser (40), d'un viseur optique et d'un système de contrôle de tir.

5. Appareil selon l'une quelconque des revendications précédentes, comprenant également au moins un dispositif accessoire d'armes (64) avec lequel l'au moins un insert est adapté pour un couplage opérationnel, dans lequel l'au moins un dispositif accessoire d'armes (64) est un ou plusieurs choisis parmi le groupe constitué d'une lampe de poche (38), d'un ensemble laser (40), d'un viseur optique et d'un système de contrôle de tir.

6. Appareil selon l'une quelconque des revendications précédentes, dans lequel l'élément de connecteur de module de commande (32) comprend des réceptacles de connecteur qui viennent en prise avec les extrémités de connecteur (35) de l'au moins un câble (34).

7. Appareil selon l'une quelconque des revendications précédentes, dans lequel le boîtier (42) comporte au moins une bride périphérique supérieure (44).

8. Appareil selon la revendication 7, dans lequel l'au moins une bride périphérique supérieure (44) présente un bord biseauté (46).

9. Appareil selon la revendication 7 ou la revendication 8, dans lequel :
l'au moins un insert (30) comprend également au moins un clip de rétention (58) avec une partie de languette extensible (60) et une fixation filetée (56) autour de laquelle l'au moins un clip de rétention (58) peut tourner ;
un canal (62) est défini entre l'au moins une bride périphérique supérieure (44) et la partie de languette extensible (60) de l'au moins un clip de rétention (58) ; et
la rotation du clip de rétention (58) autour de la fixation filetée (56) permet de serrer et de desserrer l'au moins un insert (30) dans une fente de l'interface de rail d'arme (14).

10. Appareil selon la revendication 9, dans lequel au moins un coin de l'au moins un clip de rétention (58) est arrondi pour permettre au clip de rétention (58) de tourner lorsque la fixation filetée (56) est tournée.

11. Appareil selon la revendication 9 ou la revendication 10, dans lequel au moins un coin de l'au moins un clip de rétention (58) est carré pour servir de butée afin d'empêcher le clip de rétention (58) de tourner lorsque la fixation filetée (56) est tournée.

12. Appareil selon l'une quelconque des revendications 9 à 11, comprenant également au moins un prolongateur de câble (70).

13. Appareil selon l'une quelconque des revendications précédentes, comprenant également un dispositif de commande d'accessoires (45) couplé électriquement à l'au moins un insert (30) et au module de commande (20), dans lequel le dispositif de commande d'accessoires (45) comprend une pluralité de boutons (47a, 47b, 47c) pour commander le fonctionnement du dispositif accessoire d'armes (64, 38, 40, 45) avec lequel l'au moins un insert (30) est adapté pour le couplage opérationnel.

14. Appareil selon l'une quelconque des revendications précédentes, comprenant également un montage optique (66) couplé fonctionnellement au dispositif accessoire d'armes (64, 38, 40, 45) avec lequel l'au moins un insert (30) est adapté pour un couplage opérationnel et à l'au moins un câble (34).

15. Appareil selon l'une quelconque des revendications précédentes, comprenant également le garde-main (12) comprenant l'interface de rail d'armes (14) et ayant une pluralité de fentes (18) adaptées pour recevoir un dispositif accessoire d'armes (64, 38, 40, 45).

16. Appareil selon l'une quelconque des revendications précédentes, dans lequel l'interface de communication du processeur est une interface sans fil.
